# EUROPÄISCHE PATENTSCHRIFT

(11) **EP 3 858 500 B1**
(45) Veröffentlichungstag und Bekanntmachung des Hinweises auf die Patenterteilung: **23.04.2025**
(21) Anmeldenummer: 20211037.5
(22) Anmeldetag: 01.12.2020
(51) Int. Cl.: B08B 3/02, F16K 1/14, F16K 1/44, F16K 1/52, B05B 1/30, B05B 9/01, B05B 12/00

(54) **REINIGUNGSPISTOLE**
CLEANING GUN
PISTOLET DE NETTOYAGE

(30) Priorität: 31.01.2020 DE 102020102498
(43) Veröffentlichungstag der Anmeldung: 04.08.2021
(73) Patentinhaber: Josef Kränzle GmbH & Co. KG, 89257 Illertissen (DE)
(72) Erfinder: Kränzle, Josef, 89257 Illertissen (DE)
(74) Vertreter: Müller Schupfner & Partner Patent- und Rechtsanwaltspartnerschaft mbB (Muc)

(56) Entgegenhaltungen:
- EP-A1- 1 021 669
- EP-A2- 1 234 616
- US-A- 3 394 890
- US-A- 6 000 637
- US-A1- 2019 070 621

## Beschreibung

Die Erfindung betrifft eine Reinigungspistole, insbesondere eine Hochdruckreinigungspistole, mit einer Strömungsleiteinrichtung, die unterschiedliche Flusswege aufweist.

Reinigungspistolen, insbesondere Hochdruckreinigungspistolen, sind bereits aus dem Stand der Technik bekannt. Sie werden beispielsweise zur Straßenpflasterreinigung in Fußgängerzonen, zur Fassadenreinigung und zur Motorensäuberung verwendet. Der Zweck der Reinigungspistolen ist es dabei, einen Fluidfluss von einer Hochdruckquelle in eine Vorrichtung, insbesondere in eine Reinigungslanze oder eine Sprühdüse, zu steuern. Hierzu ist der Einlass der Hockdruckreinigungspistole mittelbar über einen Schlauch mit der Hochdruckquelle verbunden und der Auslass der Hochdruckreinigungspistole z.B. mit der Reinigungslanze. Das Steuern des Fluidflusses durch die Reinigungspistole erfolgt dabei meist durch ein Ventil in der Reinigungspistole, sodass dieses Ventil die Flussmenge des Fluids bestimmt. Problematisch bei den aus dem Stand der Technik bekannten Hochdruckreinigungspistolen ist, dass die Größe des Fluidflusses durch die Hochdruckreinigungspistole schwer von einem Benutzer kontrolliert werden kann. Die aus dem Stand der Technik bekannten Hochdruckpistolen haben den Nachteil, dass für die Einstellung der Wassermenge eine zweite Hand zur Hilfe genommen werden muss bzw. die Einstellung mit einer Hand im Betrieb nur schwer möglich ist. Eventuell muss der Spritzvorgang für die Umstellung unterbrochen werden.

Die EP 1 234 616 A2 betrifft eine Handspritzpistole für ein Hochdruckreinigungsgerät mit einer Flüssigkeitsleitung, in der ein über ein Betätigungsorgan offenbares Schließventil angeordnet ist, durch dosierte Betätigung eines Betätigungsgriffs, die von der Handspritzpistole abgegebene Flüssigkeitsmenge zu dosieren, wird in der Flüssigkeitsleitung in Strömungsrichtung hintereinander zwei Schließventile angeordnet.

Die WO 99/18375 betrifft eine Ventilanordnung mit einem ersten und einem zweiten Fluidanschluss.

Es ist daher Aufgabe der vorliegenden Erfindung eine Reinigungspistole, insbesondere eine Hochdruckreinigungspistole, anzugeben, welche bei möglichst einfacher und direkter Bedienbarkeit ein hohes Maß an Kontrollierbarkeit der durchströmenden Fluidmenge ermöglicht.

Diese Aufgabe wird mit einer Reinigungspistole gemäß dem Anspruch 1 gelöst. Weitere Vorteile, Merkmale und vorteilhafte Ausführungsformen der Erfindung ergeben sich aus den Unteransprüchen, der Beschreibung sowie den Figuren und deren Beschreibung.

Erfindungsgemäß ist eine Reinigungspistole, insbesondere für einen Hochdruckreiniger, vorgesehen, umfassend ein Gehäuse mit einem Strömungskanal, eine Strömungsleiteinrichtung und eine Betätigungsvorrichtung, wobei der Strömungskanal einen Einlass und einen Auslass aufweist, wobei die Strömungsleiteinrichtung zumindest teilweise im Strömungskanal angeordnet ist, wobei die Strömungsleiteinrichtung derart ausgebildet ist, dass ein Fluidfluss durch den Strömungskanal vom Einlass zum Auslass auf unterschiedlichen Flusswegen, darunter zumindest ein erster Flussweg und ein zweiter Flussweg, stattfinden kann, wobei die Betätigungsvorrichtung dazu ausgelegt ist, die Strömungsleiteinrichtung zu betätigen und damit den Fluidfluss durch die unterschiedlichen Flusswege zu kontrollieren. Dies hat den Vorteil einer besonders einfachen und direkten Bedienbarkeit. Unter unterschiedlichen Flusswegen ist dabei insbesondere zu verstehen, dass der Fluidfluss vom Einlass zum Auslass prinzipiell auf zwei verschiedenen Flusswegen stattfinden kann. In anderen Worten kann dies bedeuten, dass zwei separate Strömungsquerschnitte existieren, welche jeweils zu einem ersten Flussweg der andere zu einem zweiten Flussweg gehören. Diese Querschnitte können beispielsweise nebeneinander angeordnet sein. Vorteilhafterweise sind diese Querschnitte jedoch derart angeordnet, dass der eine Querschnitt von dem anderen Umschlossen ist, ähnlich einem Koaxialkabel. Die Strömungseinrichtung ist dabei vorteilhafterweise derart ausgebildet, dass diese unmittelbar die Flusswege durch die verschiedenen Flusswege bedingt. Die Reinigungspistole ist dabei insbesondere eine Hochdruckreinigungspistole. Eine Hochdruckreinigungspistole ist eine Reinigungspistole, welche derart ausgelegt ist, dass durch diese ein Fluid, insbesondere ein Reinigungsfluid, fließen kann, welches unter einem Druck von 5 - 750 bar, bevorzugt von 5 - 500 bar und besonders bevorzugt von 10 - 350 bar oder stehen kann. Die Reinigungspistole kann beispielsweise über ein Verbindungsmittel, bevorzugt über einen Hochdruckschlauch, mit einer Fluidquelle verbunden sein, insbesondere einem Hochdruckreiniger insbesondere bei einer Ausgestaltung als Hochdruckreinigungspistole. Der Strömungskanal gibt dabei den Weg vor, den das Fluid durch die Reinigungspistole nimmt. Er weist dabei einen Einlass auf, durch den das Fluid in den Strömungskanal bzw. in die Reinigungspistole gelangt und einen Auslass durch den das Fluid den Strömungskanal bzw. die Reinigungspistole verlässt. Bevorzugt ist der Strömungskanal ansonsten, insbesondere zumindest teilweise durch eine Trennwand, nach außen von der Umgebung fluidisch separiert, sodass das Fluid nicht an anderen Stellen als dem Einlass oder dem Auslass in den Strömungskanal gelangen kann bzw. aus ihm austreten kann. Alternativ ist es aber auch denkbar, dass der Strömungskanal mehrere Zugänge und/oder mehrere Ausgänge verfügt. Der Strömungskanal kann beispielsweise zumindest teilweise, insbesondere im Bereich des Einlasses oder des Auslasses, einen runden Querschnitt haben. Aber auch andere Querschnittsformen wie z.B. ein eckiger Querschnitt sind denkbar. Der Strömungskanal kann einen konstanten Querschnitt aufweisen, was einen guten Fluiddurchlass gewährleistet. Aber auch ein variabler Querschnitt ist möglich, um den Strömungskanal beispielsweise an bauliche Ansprüche der äußeren Pistolenform anzupassen. Die Strömungsleiteinrichtung dient bevorzugt dazu, den Fluidfluss zu beeinflussen, beispielsweise hinsichtlich der Flussrichtung und/oder des Flussweges durch den Strömungskanal und/oder der Flussmenge. Dadurch, dass die Strömungsleiteinrichtung zumindest teilweise im Strömungskanal angeordnet ist, kann der Fluidfluss durch die Strömungsleiteinrichtung in einfacher und kompakter Bauweise beeinflusst werden. Das Fluid ist bevorzugt eine Flüssigkeit und besonders bevorzugt Wasser oder ein Wassergemisch. Das Wasser kann beispielsweise mit einem Löse- oder Reinigungsmittel versetzt sein. Eine Unterteilung des Fluidflusses in unterschiedliche Flusswege kann z.B. zu einer Kontrolle der Fluidmenge genutzt werden. Die Kontrolle der Flusswege über die Betätigungsvorrichtung kann dabei vom Nutzer gesteuert werden. Beispielsweise kann über die Betätigungsvorrichtung die Strömungsleiteinrichtung derart kontrolliert bzw. betätigt werden, dass ein einzelner oder mehrere Flusswege abgesperrt oder geöffnet werden. Auch ist es denkbar, dass die Form bzw. Gestalt und/oder die Position eines oder mehrerer Flusswege veränderbar sind.

Zweckmäßigerweise umfasst die Reinigungspistole eine Betätigungsvorrichtung, insbesondere mit einem Handhebel, wobei die Betätigungsvorrichtung dazu ausgelegt ist, die Strömungsleiteinrichtung zu betätigen, insbesondere durch eine zumindest teilweise Verlagerung der Strömungsleiteinrichtung relativ zum Gehäuse, bevorzugt in eine Betätigungsrichtung. Die Betätigungsvorrichtung ist dazu ausgelegt, die Strömungsleiteinrichtung zu betätigen, insbesondere durch eine zumindest teilweise Verlagerung der Strömungsleiteinrichtung relativ zum Gehäuse, bevorzugt in Betätigungsrichtung. Eine zumindest teilweise Verlagerung bedeutet dabei einerseits, dass zumindest ein Teil oder Abschnitt der Strömungsleiteinrichtung örtlich versetzt wird. So kann beispielsweise eine Leitung oder ein Kolben verschoben werden, die/der Teil der Strömungsleiteinrichtung ist. Es ist denkbar, dass je nach Betätigung unterschiedliche Teile der Strömungsleiteinrichtung verlagert werden. Andererseits kann teilweise Verlagerung auch bedeuten, dass je nach Betätigung die Strömungsleiteinrichtung oder ein Teil der Strömungsleiteinrichtung unterschiedlich weit verlagert werden kann. Die Betätigungsrichtung kann dabei zumindest teilweise parallel zu der Fluidflussrichtung durch den Strömungskanal verlaufen.

Vorzugsweise ist die Strömungsleiteinrichtung derart ausgebildet, dass ein Fluidfluss durch den Strömungskanal vom Einlass zum Auslass durch die Strömungsleiteinrichtung verhinderbar ist, insbesondere wenn die Strömungsleiteinrichtung oder deren Bestandteile sich in einer Schließstellung befinden. Verhindert bedeutet dabei, dass kein Fluss durch den Strömungskanal möglich ist, insbesondere ist daher auch kein Fluss durch den ersten Flussweg oder den zweiten Flussweg möglich. Mit anderen Worten kann das Fluid in diesem Fall nicht vom Einlass der Reinigungspistole zum Auslass gelangen. Dies ermöglicht es dem Anwender, den Fluidstrom zu unterbrechen, ohne den Hochdruckreiniger bzw. eine Pumpe des Hochdruckreinigers abstellen zu müssen.

In einer weiteren bevorzugten Ausführungsform ist die Betätigungsvorrichtung dazu ausgelegt, dass in einem ersten Betätigungszustand der erste Flussweg geöffnet ist und bei Bedarf in einem zweiten Betätigungszustand der zweite Flussweg geöffnet ist. Dies ermöglicht es, die Fluidmenge durch das nacheinander folgende Zuschalten der beiden Flusswege sukzessiv zu erhöhen und dadurch die Flussmenge besonders gut auf einfach Weise zu kontrollieren. Ein weiterer Vorteil dieser Ausführungsform ist es, dass durch ein derartiges zweistufiges Öffnen der Flusswege, der Betätigungswiderstand erheblich reduziert ist, da somit nicht der komplette Fluidfluss mit einem Mal aktiviert wird.

Vorzugsweise umfasst die Betätigungsvorrichtung einen Betätigungshebel, bevorzugt einen Handhebel. Dieser ermöglicht dem Anwender ein direktes und einfaches Betätigen.

Bevorzugt umfasst die Betätigungsvorrichtung einen Handhebel, wobei in dem ersten Betätigungszustand der Handhebel teilweise niedergedrückt ist und wobei in dem zweiten Betätigungszustand der Handhebel stärker, bevorzugt vollständig, niedergedrückt ist. Dies stellt eine besonders einfache und direkte Form der Bedienung für den Anwender dar, da das sukzessive Öffnen der beiden Flusswege und damit das sukzessive Erhöhen des Fluidflusses auf sehr direkte und einfache Weise direkt mit der Betätigung des Handhebels verknüpft ist. Insbesondere ist es beispielsweise auch möglich durch Zurücknehmen des zweiten Betätigungszustands den zweiten Flussweg wieder zu schließen und somit die Flussmenge wieder einzuschränken. Mit anderen Worten kann der Anwender die Flussmenge nach Belieben durch den von ihm induzierten Ausschlag des Handhebels direkt kontrollieren.

In einer bevorzugten Ausführungsform weist die Strömungsleiteinrichtung zusätzlich einen dritten Flussweg und optional auch einen vierten Flussweg oder noch weitere Flusswege auf. Dies ermöglicht ein besonders fein dosiertes Einstellen der Flussmenge.

Erfindungsgemäß ist die Reinigungspistole derart ausgebildet, dass der erste Flussweg den zweiten Flussweg und/oder der zweite Flussweg den ersten Flussweg, zumindest abschnittsweise entlang des oder der Flusswege, umgibt. Hierdurch kann eine besonders kompakte und leicht herzustellende Reinigungspistole erreicht werden. Vorteilhafterweise existiert daher eine Schnittebene durch die Reinigungspistole, in welcher der erste Flussweg vom zweiten Flussweg oder der zweite Flussweg vom ersten Flussweg umschlossen bzw. umgeben ist. Besonders bevorzugt sind der erste und der zweite Flussweg in der Schnittebene konzentrisch zu einander angeordnet. Hierdurch kann eine besonders einfach zu handhabende Reinigungspistole erreicht werden. Alternativ oder zusätzlich bevorzugt umgibt der erste bzw. der zweite Flussweg den anderen Flussweg kreisringförmig. In anderen Worten kann der umgebende Flussweg entlang seines Strömungswegs durch einen Ringspalt fließen, welcher den anderen Flussweg umschließt bzw. umgibt. Hierdurch kann eine besonders einfach herzustellende und kompakte Reinigungspistole erreicht werden.

Erfindungsgemäß weist die Strömungsleiteinrichtung einen Schließkolben auf, wobei insbesondere der erste Flussweg zumindest teilweise durch den Schließkolben führt. Der Schließkolben hat die Funktion, gegebenenfalls einen Flussweg, bevorzugt den zweiten Flussweg und/oder den ersten Flussweg, zu verschließen. Ein Verlauf des ersten Flusswegs durch den Schließkolben bedeutet dabei, dass der Schließkolben einen durchgängigen Hohlraum beinhaltet durch den der erste Flussweg geführt ist. Führt der erste Flussweg durch den Schließkolben, so sind dadurch zumindest zwei unterschiedliche Flusswege auf besonders platzsparende Weise angeordnet, sodass wertvoller Bauraum gespart werden kann.

Erfindungsgemäß umfasst die Strömungsleiteinrichtung eine Ventileinrichtung, wobei die Ventileinrichtung vorteilhafterweise Innerhalb des Schließkolbens angeordnet ist. Hierdurch kann eine besonders kompakte Reinigungspistole erreicht werden. Dieser Schließkolben kann dazu ausgelegt sein, den zweiten Flussweg zu versperren oder zu öffnen. Das bedeutet insbesondere, dass auch bei verschlossenem Schließkolben und damit beispielsweise bei einem verschlossenen zweiten Flussweg der Fluidfluss über den ersten Flussweg über die Ventileinrichtung je nach Bedarf verhindert oder ermöglicht werden kann. Hierdurch kann eine sehr feine Dosierung der Fluidmenge erreicht werden. Vorteilhafterweise kann dabei beispielsweise der Schließkolben, wenn er im Strömungskanal angeordnet ist, den kompletten Querschnitt des Strömungskanals ausfüllen. Ein Öffnen des Schließkolbens kommt in diesem Beispiel einem Freigeben des kompletten Strömungskanals oder alternativ eines relativ großen Teils des Strömungskanals gleich. Bei einem geschlossenen Schließkolben kann dagegen über die Ventileinrichtung im Schließkolben ein schmalerer Flussweg, in diesem Fall der erste Flussweg, kontrolliert, d. h. insbesondere geöffnet oder geschlossen, werden. Bevorzugt führt der zweite Flussweg um den Schließkolben.

Weiterhin bevorzugt ist der Schließkolben und/oder zumindest ein Teil der Ventileinrichtung durch die Betätigungsvorrichtung mittel- oder unmittelbar verlagerbar. Das bedeutet, dass durch Betätigen der Betätigungsvorrichtung der Schließkolben in eine den Flussweg freigebende Position und/oder in eine den Flussweg verschließende Position gebracht werden kann. Ebenso kann durch die Betätigungsvorrichtung die Ventileinrichtung geöffnet und/oder geschlossen werden, indem ein Teil oder mehrere Teile der Ventileinrichtung derart verschoben werden, dass sie einen Flussweg abschließen und/oder freigeben.

Erfindungsgemäß umfasst die Ventileinrichtung eine Kugel mit einer Spanneinrichtung, insbesondere einer Feder, wobei der erste Flussweg durch einen Zwischenraum zwischen der Kugel und dem Schließkolben führt, wobei vorteilhafterweise ein Teil der Betätigungsvorrichtung, insbesondere ein Übertragungsmittel der Betätigungsvorrichtung, die Kugel mittel- oder unmittelbar kontaktiert. Hierdurch kann eine besonders kompakte Ventileinrichtung erreicht werden. Bevorzugt ist die Kugel durch die Feder, insbesondere entgegen der Betätigungsrichtung, gegen den Schließkolben und/oder gegen die Betätigungsvorrichtung vorgespannt, insbesondere gegen das Übertragungsmittel der Betätigungsvorrichtung. Durch den Kontakt eines Teils der Betätigungsvorrichtung mit der Kugel ist es möglich, mittels der Betätigungsvorrichtung die Kugel gegen den Widerstand der Feder zu verschieben. Durch Wegschieben der Kugel entsteht der Zwischenraum zwischen der Kugel und dem Schließkolben und der erste Flussweg ist geöffnet. Beispielsweise kann das Übertragungsmittel mit einem Handhebel in Kontakt sein, wobei durch Aktivieren des Handhebels das Übertragungsmittel betätigt und die Kugel verschoben wird.

Vorzugsweise sind die Ventileinrichtung und der Schließkolben konzentrisch und parallel ausgerichtet. Das bedeutet insbesondere, dass einerseits die Ventileinrichtung in dem Schließkolben angeordnet ist und dass andererseits sowohl der Schließkolben als auch die Ventileinrichtung durch eine Bewegung in die gleiche Betätigungsrichtung geöffnet werden können. Bevorzugt ist dabei das Übertragungsmittel ein länglicher Gegenstand, beispielsweise ein runder oder eckiger Stift, der über eine Aktivierung des Handhebels in die Betätigungsrichtung verschoben werden kann. Dabei kontaktiert er zunächst die Ventileinrichtung, insbesondere die Kugel der Ventileinrichtung, und schiebt den kontaktierten Teil in die Betätigungsrichtung. Bei weiterem Verschieben wird schließlich auch der Schließkolben kontaktiert und in Betätigungsrichtung verlagert. Bevorzugt weist das Übertragungsmittel dabei zwei unterschiedliche Querschnitte mit zwei verschiedenen Durchmessern auf, wobei der Durchmesser eines Endabschnitts des Übertragungsmittels, welcher sich auf der der Ventileinrichtung und dem Schließkolben zugewandten Seite des Übertragungsmittels befindet, geringer ist als der Durchmesser des entgegen der Betätigungsrichtung darauffolgenden Abschnitts. Beim Verschieben des Übertragungsmittels kontaktiert dabei vorzugsweise der Endabschnitt des Übertragungsmittel durch eine Öffnung des Schließkolbens einen Teil der Ventileinrichtung, bevorzugt die Kugel, und schiebt diesen zurück, wodurch die Ventileinrichtung und damit der erste Flussweg geöffnet wird. Der Durchmesser der Endabschnitts ist dabei geringer als der Durchmesser der Öffnung des Schließkolbens, sodass der Schließkolben durch diesen Vorgang nicht beeinträchtigt wird. Durch stärkeres Betätigen der Betätigungsvorrichtung gelangt dann der nächste Abschnitt des Übertragungsmittels, welcher einen größeren Durchmesser als die Öffnung des Schließkolbens hat, in Kontakt mit dem Schließkolben, sodass durch weiteres Verschieben des Übertragungsmittels in Betätigungsrichtung auch der Schließkolben in Betätigungsrichtung verschoben wird. Dadurch wird nun auch der zweite Flussweg geöffnet.

**In** einer bevorzugten Ausführungsform weist die Reinigungspistole eine verschließbare erste Öffnung auf, durch die auf das Übertragungsmittel zugegriffen werden kann. Dies ermöglicht gegebenenfalls z.B. das einfache Austauschen oder Reparieren des Übertragungsmittels oder beispielsweise eine Anpassung der Positionierung eines Dichtrings, der mit dem Übertragungsmittel verbunden ist bzw. die Reinigungspistole gegebenenfalls an einer Stelle abdichtet, an der das Übertragungsmittel das Innere der Reinigungspistole verlässt, um beispielsweise mit dem Betätigungsmittel, insbesondere einem Handhebel, in Verbindung zu stehen. Vorteilhafterweise ist diese erste Öffnung im normalen Betrieb der Reinigungspistole verschlossen. Die erste Öffnung ist dabei bevorzugt durch einen Schraubmechanismus verschließbar. Vorzugsweise befindet sich die erste Öffnung insbesondere vom Übertragungsmittel aus gesehen in einer Richtung entlang einer Längsachse des Übertragungsmittels. Dies ermöglicht eine besonders einfache Wartung des Übertragungsmittels und seiner Umgebung.

**In** einer weiteren bevorzugten Ausführungsform weist die Reinigungspistole eine verschließbare zweite Öffnung auf, durch die auf den Schließkolben zugegriffen werden kann. Dies ermöglicht gegebenenfalls z.B. das einfache Austauschen oder Reparieren des Schließkolbens bzw. eine Anpassung der Positionierung des Schließkolbens. Vorteilhafterweise ist diese zweite Öffnung im normalen Betrieb der Reinigungspistole verschlossen. Die zweite Öffnung ist dabei bevorzugt durch einen Schraubmechanismus verschließbar. Vorzugsweise befindet sich die zweite Öffnung in der Nähe des Schließkolbens, insbesondere vom Schließkolben aus gesehen in einer Richtung entlang einer Längsachse des Schließkolbens. Dies ermöglicht eine besonders einfache Wartung des Schließkolbens.

Vorteilhafterweise weist der Schließkolben eine Vielzahl von seitlichen Eingangsöffnungen und eine Ausgangsöffnung auf, wobei die Ausgangsöffnung insbesondere durch die Kugel der Ventileinrichtung verschließbar ist. Der erste Flussweg führt dabei zunächst durch die Eingangsöffnungen und dann durch die Ausgangsöffnung. Bevorzugt befinden sich die Eingangsöffnungen an seitlichen, insbesondere ebenen Seitenflächen des Schließkolbens.

In einer Ausführungsform ist die Strömungsleiteinrichtung derart ausgelegt, dass der kleinste durchströmbare Strömungsquerschnitt des ersten Flusswegs kleiner ist als der kleinste durchströmbare Strömungsquerschnitt des zweiten Flusswegs. Dadurch ist ein zweites Fluidvolumen, welches pro Zeiteinheit durch den Strömungskanal der Reinigungspistole gelangt, bei einem geöffneten zweiten Flussweg größer als ein erstes Fluidvolumen, welches pro Zeiteinheit durch den Strömungskanal gelangt, wenn nur der erste Flussweg geöffnet ist. Bevorzugt ist das Verhältnis des Strömungsquerschnitt des ersten Flusswegs zum zweiten Flussweg größer als 0,1 und kleiner als 0,9, besonders bevorzugt größer als 0,3 und kleiner als 0,7 und ganz besonders bevorzugt ca. 0,5.

In einer bevorzugten Ausführungsform ist die Strömungsleiteinrichtung derart ausgelegt, dass bei einem Fluidfluss durch den zweiten Flussweg auch ein Fluidfluss durch den ersten Flussweg möglich ist. Dadurch kann der vorhandene Platz im Strömungskanal bestmöglich genutzt werden. Insbesondere, wenn der erste Flussweg durch den Schließkolben des zweiten Flusswegs führt ist somit ein größtmögliches maximales Fluidvolumen pro Zeiteinheit erreichbar. Bevorzugt ist bei einem Schließkolben in Schließstellung und einer geöffneten Ventileinrichtung nur ein Fluidfluss durch den ersten Flussweg und kein Fluidfluss durch den zweiten Flussweg möglich.

In einer alternativen Ausführungsform befindet sich am Gehäuse ein Verschließmechanismus, beispielsweise in Form einer Schraube, welche von außen in den Strömungskanal geschraubt werden kann. Während im nicht eingeschraubten Zustand der Strömungskanal zumindest an der Stelle des Verschließmechanismus frei durchgängig ist, wird im eingeschraubten Zustand der Strömungskanal ganz oder teilweise blockiert. Zu diesem Zweck kann sich beispielsweise im Gehäuse ein Gewinde für die Schraube befinden. Ein vollständiges Blockieren des Strömungskanals kann als Sicherung dienen um ein unbeabsichtigtes Betätigen der Reinigungspistole auszuschließen. Ein teilweises Blockieren stellt eine weitere Einstellmöglichkeit des Fluidstroms dar.

In einer weiteren alternativen Ausführungsform befindet sich ein Blockiermechanismus an der Betätigungsvorrichtung. So kann zum Beispiel ein umlegbarer Schalter am Handhebel ein unbeabsichtigtes Betätigen des Hebels verhindern, indem er zwischen Hebel und Handgriff platziert ist und so den Weg zum Betätigen des Hebels blockiert. Dies stellt einen recht einfachen Sicherheitsmechanismus dar, der unkompliziert und schnell bei Bedarf aktiviert werden kann und z.B. bei kurzen Pausen zur Anwendung kommen kann.

In einer bevorzugten Ausführungsform ist das Gehäuse zumindest teilweise, bevorzugt zum überwiegenden Teil und besonders bevorzugt zum weitüberwiegenden Teil, aus Metall, insbesondere aus Aluminium, Messing oder Bronze. Dabei bedeutet überwiegend 70 Prozent oder mehr und weitüberwiegend 80 Prozent oder 95 Prozent oder mehr. Dies gewährleistet eine besonders stabile Reinigungspistole.

In einer weiteren bevorzugten Ausführungsform weist der Einlass und/oder der Auslass des Strömungskanals ein Montagemittel, insbesondere ein Innen- oder Außengewinde auf. Dies ermöglicht die einfache und gleichzeitig sichere Befestigung z.B. einer Reinigungslanze oder Hochdruckdüse am Auslass sowie z.B. eines Hochdruckschlauchs am Auslass.

In einer weiteren Ausführungsform erstreckt sich der Einlass des Strömungskanals in eine Einlassrichtung und der Auslass des Strömungskanals erstreckt sich in eine Auslassrichtung, wobei zwischen der Einlassrichtung und der Auslassrichtung ein erster Winkel gebildet ist, wobei der erste Winkel in einem Bereich von 40° bis 150° und bevorzugt in einem Bereich von 60 bis 120° liegt. Dies ermöglicht eine leichte Herstellung bei gleichzeitig verhältnismäßig geringem Strömungsverlust.

In einer weiteren Ausführungsform ist die Strömungsleiteinrichtung zumindest teilweise in einem Teil des Strömungskanals, welcher sich entlang der Betätigungsrichtung erstreckt, angeordnet. Dies ermöglicht eine besonders einfache und effektive Konstruktion des Betätigungsmechanismus.

Selbstverständlich lassen sich die oben angegebenen Ausführungsformen, soweit nicht anders angegeben, auch miteinander kombinieren.

Ein besseres Verständnis und weitere Vorteile und Merkmale ergeben sich aus der nachfolgenden Beschreibung einer bevorzugten Ausführungsformen des erfindungsgemäßen Gegenstands und zweier Ausführungsformen eines erfindungsgemäßen Schließkolbens mit Bezug auf die beigefügten Figuren. Es zeigen:
- **Fig. 1**: Eine Schnittansicht einer erfindungsgemäßen Ausführungsform einer Reinigungspistole, bei der der erste und der zweite Flussweg geschlossen sind.
- **Fig. 2**: Eine vergrößerte Schnittansicht eines Bereichs um die Strömungsleiteinrichtung einer erfindungsgemäßen Ausführungsform einer Reinigungspistole, bei der der erste und der zweite Flussweg geschlossen sind.
- **Fig. 3**: Eine Schnittansicht einer erfindungsgemäßen Ausführungsform einer Reinigungspistole, bei der der erste Flussweg geöffnet und der zweite Flussweg geschlossen ist.
- **Fig. 4**: Eine vergrößerte Schnittansicht eines Bereichs um die Strömungsleiteinrichtung einer erfindungsgemäßen Ausführungsform einer Reinigungspistole, bei der der erste Flussweg geöffnet und der zweite Flussweg geschlossen ist;
- **Fig. 5**: Eine Schnittansicht einer erfindungsgemäßen Ausführungsform einer Reinigungspistole, bei der der erste und der zweite Flussweg geöffnet sind;
- **Fig. 6**: Eine vergrößerte Schnittansicht eines Bereichs um die Strömungsleiteinrichtung einer erfindungsgemäßen Ausführungsform einer Reinigungspistole, bei der der erste und der zweite Flussweg geöffnet sind;
- **Fig. 7**: Eine Perspektivansicht einer ersten erfindungsgemäßen Ausführungsform eines Schließkolbens; und
- **Fig. 8**: Eine Perspektivansicht einer zweiten erfindungsgemäßen Ausführungsform eines Schließkolbens.

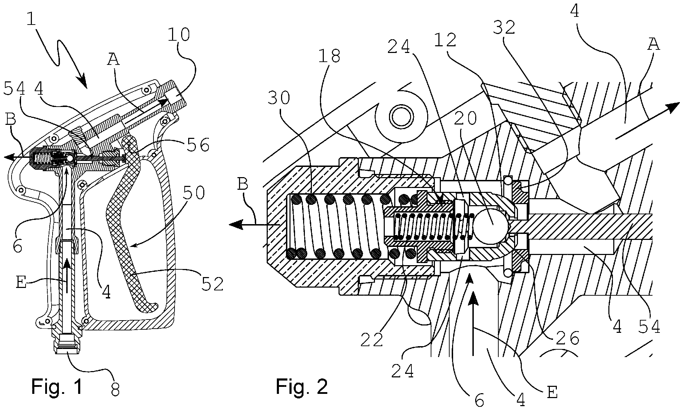

Auf den **Figuren 1** und **2** ist eine Reinigungspistole 1 mit einem Handhebel 52, der Teil einer Betätigungsvorrichtung 50 ist, gemäß einer bevorzugten Ausführungsform der Erfindung zu sehen, bei der der erste Flussweg 41 und der zweite Flussweg 42 geschlossen sind. Die Reinigungspistole 1 verfügt über einen Einlass 8, an den beispielsweise ein Hochdruckschlauch angeschlossen werden kann, und über den ein Fluid in die Reinigungspistole 1 gelangen kann. Im hier gezeigten geschlossenen Zustand ist der Weg durch den Strömungskanal 4 durch die Strömungsleiteinrichtung 6 versperrt und das Fluid kann nicht zum Auslass 10 gelangen. Der Handhebel 52 befindet sich im nicht gedrückten Zustand. Das Übertragungsmittel 54, welches hier ein länglicher Stift ist, befindet sich mit der Kugel 20 der Ventileinrichtung 18 in Kontakt, drückt diese aber nicht in Betätigungsrichtung B gegen die Federkraft der Feder 22 weg, sodass die Kugel an der Ausgangsöffnung 26 anliegt und somit den ersten Flussweg 41 blockiert. Zudem liegt der Schließkolben 12, vorgespannt durch die Spannfeder 30, am Anschlag 32 an und versperrt somit auch den zweiten Flussweg 42.

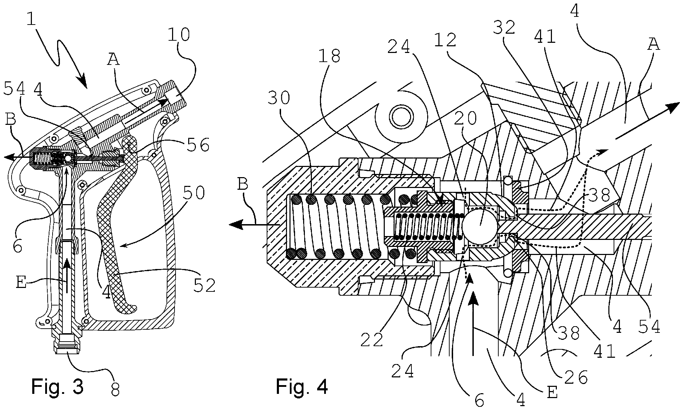

Auf den **Figuren 3** und **4** ist eine Reinigungspistole 1 bzw. Hochdruckreinigungspistole mit einem Handhebel 52, der Teil einer Betätigungsvorrichtung 50 ist, gemäß einer bevorzugten Ausführungsform der Erfindung zu sehen, bei der der erste Flussweg 41 geöffnet und der zweite Flussweg 42 geschlossen ist. Der Handhebel 52 ist in diesem Fall teilweise niedergedrückt. Das bedeutet, er ist um das Drehgelenk 56 im Uhrzeigersinn gedreht und verschiebt dadurch das Übertragungsmittel 54 in Betätigungsrichtung B. Wie insbesondere in Fig. 4 zu erkennen ist, wird dadurch die Kugel 20, welche mit dem schmalen Ende des Übertragungsmittels 54 in Kontakt ist, gegen die Federspannkraft der Feder 22 in Betätigungsrichtung B verlagert. Die Ventileinrichtung 18 ist demnach geöffnet. Durch den verhältnismäßig geringen Dichtsitzdurchmesser in Form der relativ kleinen Kugel 20 ist ein Abzugswiderstand, der zum Öffnen des ersten Flusswegs 41 aufgebracht werden muss vorteilhafterweise gering. Der hintere, breitere Teil des Übertragungsmittels 54 ist nun stellenweise mit dem Schließkolben 12 an Kontaktflächen 34 in Kontakt, verschiebt diesen in der hier gezeigten Stellung aber noch nicht in die Betätigungsrichtung B. Der Schließkolben liegt daher auch hier, vorgespannt durch die Spannfeder 30, an dem Anschlag 32 an und versperrt den zweiten Flussweg. Der Anschlag 32 weist in dieser Ausführungsform eine zentrale runde Öffnung auf, durch die der erste Flussweg 41 führt. Ein Fluid, welches durch den Einlass 8 in Einlassrichtung E durch den Strömungskanal 4 zur Strömungsleiteinrichtung gelangt, kann über den gestrichelt angedeuteten ersten Flussweg 41 über seitliche Eingangsöffnungen 24 im Schließkolben 12 durch die Strömungsleiteinrichtung 6 an der Kugel 20 vorbei und durch die Ausgangsöffnung 26 des Schließkolbens 12 zum Auslass 10 gelangen und die Reinigungspistole 1 in Auslassrichtung A wieder verlassen. In dieser Stellung gelangt vorzugsweise nur ein Teil der maximal möglichen Fluidmenge zum Ausgang. Bevorzugt ist die Federspannkraft der Spannfeder 30, welche den Schließkolben vorspannt, größer als die Federspannkraft der Feder 20 der Ventileinrichtung 18. Dadurch bemerkt der Anwender vorteilhafterweise, sobald er die Ventileinrichtung 18 durch betätigen des Handhebels 52 vollständig geöffnet hat, einen deutlich größeren Widerstand und weiß daher, dass ein weitergehendes Betätigen des Handhebels entgegen dem größeren Widerstand das Öffnen des zweiten Flusswegs 42 zur Folge hat. Das zweistufige Öffnen zunächst des ersten Flusswegs 41 und danach des zweiten Flusswegs 42, wobei insbesondere zunächst die Kugel 20 und danach der gesamte Schließkolben 12 bewegt werden, hat zusätzlich den Vorteil, dass der Abzugswiderstand des Handhebels 52 deutlich reduziert ist. Ohne diesen zweistufigen Mechanismus müsste die Kugel 20, welche in dem Fall mit dem gesamten jeweiligen hydraulischen Druck beaufschlagt wäre, ruckartig abgehoben werden, d.h. das Betätigen müsste mit sehr viel Kraft durchgeführt werden.

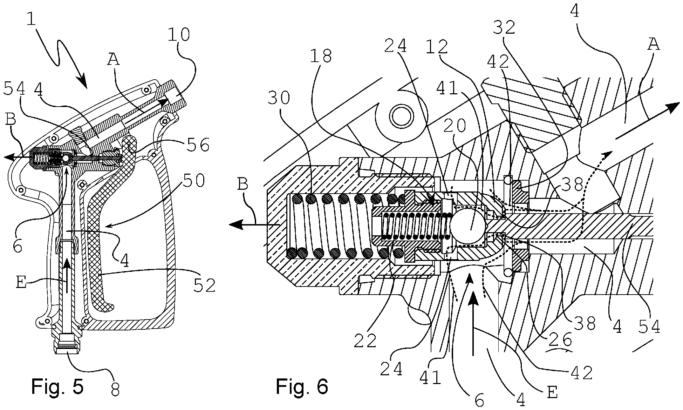

Auf den **Figuren 5** und **6** ist eine Reinigungspistole 1 mit einem Handhebel 52, der Teil einer Betätigungsvorrichtung 50 ist, gemäß einer bevorzugten Ausführungsform der Erfindung zu sehen, bei der der erste Flussweg 41 und der zweite Flussweg 42 geöffnet sind. Der Handhebel 52 der Betätigungsvorrichtung 50 ist in diesem Fall voll durchgedrückt, was einer maximal möglichen Drehung um das Drehgelenk 56 in Uhrzeigerrichtung entspricht. Dadurch ist das Übertragungsmittel 54 maximal weit in Betätigungsrichtung B verlagert. Das vordere, schmale Ende des Übertragungsmittels 54 hat die Kugel 20 gegen die Federspannkraft er Feder 22 in Betätigungsrichtung B verschoben. Zusätzlich liegt der hintere, breite Teil des Übertragungsmittels 54 an den Kontaktflächen 34 des Schließkolbens 12 an und hat den Schließkolben 12 gegen die Federspannkraft der Spannfeder 30 ebenfalls in Betätigungsrichtung B verlagert. Dadurch ist einerseits der erste Flussweg 41, wie auch schon im Fall der Figuren 3 und 4, frei. Andererseits ist nun auch der zweite Flussweg 42 frei und führt am Schließkolben 12 vorbei sowie durch eine zentrale runde Öffnung im Anschlag 32. Hinter dem Anschlag 42 sind der erste Flussweg 41 und der zweite Flussweg in dieser Ausführungsform wieder vereint und das Fluid wird über den Strömungskanal 4 weiter zum Auslass 10 geführt. In dieser Stellung ist ein maximaler Fluidfluss ermöglicht.

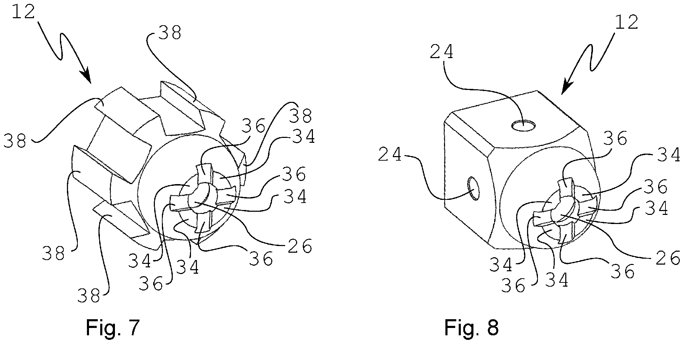

In **Figur 7** ist eine bevorzugte Ausführungsform des Schließkolbens 12 zu sehen. An den Kontaktflächen 34 liegt bei teilweise oder vollständig gedrücktem Handhebel 52 das Übertragungsmittel 54 an. Ist der Handhebel 52 vollständig durchgedrückt, so ist der Schließkolben 12 dadurch in Betätigungsrichtung B verlagert und der zweite Flussweg 42, der um den Schließkolben herumführt, ist freigegeben. Bei an den Kontaktflächen 34 anliegendem Übertragungsmittel 54 wird der Teil des Fluids, der über den ersten Flussweg 41 geführt wird, über die Vertiefungen 36 am Übertragungsmittel 54 vorbeigeführt. Die seitlichen Flügel 38 ermöglichen verbesserte Strömungseigenschaften. Es wird dadurch auf vorteilhafte Weise eine Laminareströmung ermöglicht, wobei Verwirbelungen stark reduziert bzw. ganz verhindert werden. So wird ein besonders effektiver Fluidfluss mit minimalem Energieverlust gewährleistet.

In **Figur 8** ist eine weitere bevorzugte Ausführungsform des Schließkolbens 12 zu sehen. Das Fluid gelang durch die seitlichen Eingangsöffnungen 24 vom Einlass 8 kommend in den Schließkolben 12 und verlässt diesen bei geöffnetem erstem Flussweg 41 durch die Ausgangsöffnung 26 in Richtung Auslass 10. An den Kontaktflächen 34 liegt bei teilweise oder vollständig gedrücktem Handhebel 52 das Übertragungsmittel 54 an. Ist der Handhebel 52 vollständig durchgedrückt, so ist der Schließkolben 12 dadurch in Betätigungsrichtung B verlagert und der zweite Flussweg 42, der um den Schließkolben herumführt, ist freigegeben. Bei an den Kontaktflächen 34 anliegendem Übertragungsmittel 54 wird der Teil des Fluids, der über den ersten Flussweg 41 geführt wird, über die Vertiefungen 36 am Übertragungsmittel 54 vorbeigeführt.

### Bezugszeichenliste:

- 1: - Reinigungspistole
- 2: - Gehäuse
- 4: - Strömungskanal
- 6: - Strömungsleiteinrichtung
- 8: - Einlass
- 10: - Auslass
- 12: - Schließkolben
- 14: - Ventileinrichtung
- 18: - Ventileinrichtung
- 20: - Kugel
- 22: - Feder
- 24: - Eingangsöffnung
- 26: - Ausgangsöffnung
- 28: - Seitenfläche
- 30: - Spannfeder
- 32: - Anschlag
- 34: - Kontaktfläche
- 36: - Vertiefung
- 38: - seitliche Flügel
- 41: - Erster Flussweg
- 42: - Zweiter Flussweg
- 50: - Betätigungsvorrichtung
- 52: - Handhebel
- 54: - Übertragungsmittel
- 56: - Drehgelenk
- A: - Auslassrichtung
- B: - Betätigungsrichtung
- E: - Einlassrichtung
- W1: - erster Winkel

## Patentansprüche

1. Reinigungspistole (1), insbesondere für einen Hochdruckreiniger, umfassend ein Gehäuse (2) mit einem Strömungskanal (4), eine Strömungsleiteinrichtung (6) und eine Betätigungsvorrichtung (50),
wobei der Strömungskanal (4) einen Einlass (8) und einen Auslass (10) aufweist,
wobei die Strömungsleiteinrichtung (6) zumindest teilweise im Strömungskanal (4) angeordnet ist,
wobei die Strömungsleiteinrichtung (6) derart ausgebildet ist,
dass ein Fluidfluss durch den Strömungskanal (4) vom Einlass (8) zum Auslass (10) auf unterschiedlichen Flusswegen, darunter zumindest ein erster Flussweg (41) und ein zweiter Flussweg (42), stattfinden kann,
wobei die Betätigungsvorrichtung (50) dazu ausgelegt ist, die Strömungsleiteinrichtung (6) zu betätigen und damit den Fluidfluss durch die unterschiedlichen Flusswege zu kontrollieren
wobei die Strömungsleiteinrichtung (6) einen Schließkolben (12) aufweist, wobei die Strömungsleiteinrichtung (6) eine Ventileinrichtung (18) umfasst, wobei die Ventileinrichtung (18) eine Kugel (20) mit einer Feder (22) umfasst, wobei der erste Flussweg (41) durch einen Zwischenraum zwischen der Kugel (20) und dem Schließkolben (12) führt,
wobei die Reinigungspistole (1) derart ausgebildet ist, dass der erste Flussweg (41) den zweiten Flussweg (42) und/oder der zweite Flussweg (42) den ersten Flussweg (41) umgibt.

2. Reinigungspistole (1) nach Anspruch 1, wobei die Reinigungspistole (1) dazu ausgelegt ist, dass der Fluidfluss durch eine zumindest teilweise Verlagerung der Strömungsleiteinrichtung (6) relativ zum Gehäuse (2), bevorzugt in eine Betätigungsrichtung (B) kontrollierbar ist.

3. Reinigungspistole (1) nach Anspruch 1 oder 2,
wobei die Betätigungsvorrichtung (50) dazu ausgelegt ist, dass in einem ersten Betätigungszustand der erste Flussweg (41) geöffnet ist und bei Bedarf in einem zweiten Betätigungszustand der zweite Flussweg (42) geöffnet ist.

4. Reinigungspistole (1) nach Anspruch 3,
wobei die Betätigungsvorrichtung (50) einen Handhebel (52) umfasst,
wobei in dem ersten Betätigungszustand der Handhebel (52) teilweise niedergedrückt ist und
wobei in dem zweiten Betätigungszustand der Handhebel (52) stärker, bevorzugt vollständig, niedergedrückt ist.

5. Reinigungspistole (1) nach einem der vorhergehenden Ansprüche,
wobei die Strömungsleiteinrichtung (6) derart ausgebildet ist, dass ein Fluidfluss durch den Strömungskanal (4) vom Einlass (8) zum Auslass (10) durch die Strömungsleiteinrichtung (6) verhinderbar ist, insbesondere wenn die Strömungsleiteinrichtung (6) oder deren Bestandteile sich in einer Schließstellung befinden.

6. Reinigungspistole (1) nach einem der vorhergehenden Ansprüche,wobei der erste Flussweg (41) zumindest teilweise durch den Schließkolben (12) führt.

7. Reinigungspistole (1) nach einem der vorhergehenden Ansprüche,wobei die Ventileinrichtung (18) Innerhalb des Schließkolbens (12) angeordnet ist und dazu ausgelegt ist, den ersten Flussweg (41) zu versperren oder zu öffnen.

8. Reinigungspistole (1) nach einem der vorhergehenden Ansprüche,
wobei die Ventileinrichtung (18) ein erstes Rückstellelement (22) mit einer ersten Rückstellkraft umfasst,
wobei das erste Rückstellelement (22) durch die erste Rückstellkraft einem Öffnen der Ventileinrichtung (19) durch die Betätigungsvorrichtung (50) entgegenwirkt,
wobei der Schließkolben (12) durch ein zweites Rückstellelement (30) mit einer zweiten Rückstellkraft gegen einen Anschlag (32) gedrückt wird und damit in einer Verschlussstellung, die den zweiten Flussweg (42) versperrt, gehalten wird,
wobei die Rückstellkraft einer Betätigung des Schließkolbens in einer Betätigungsrichtung (B) und damit einem Öffnen des zweiten Flusswegs (42) durch die Betätigungsvorrichtung (50) entgegenwirkt,
wobei die zweite Rückstellkraft größer als die erste Rückstellkraft ist.

9. Reinigungspistole (1) nach einem der vorhergehenden Ansprüche,
wobei ein Teil der Betätigungsvorrichtung (50), insbesondere ein Übertragungsmittel (54) der Betätigungsvorrichtung (50), die Kugel (20) mittel- oder unmittelbar kontaktiert.

10. Reinigungspistole (1) nach einem der vorhergehenden Ansprüche,
wobei die Kugel (20) durch die Feder (22), insbesondere entgegen der Betätigungsrichtung (B), gegen den Schließkolben (12) und/oder gegen die Betätigungsvorrichtung (50) vorgespannt ist, insbesondere gegen das Übertragungsmittel (54) der Betätigungsvorrichtung (50).

11. Reinigungspistole (1) nach einem der vorhergehenden Ansprüche,
wobei der Schließkolben (12) und/oder zumindest ein Teil der Ventileinrichtung (18) durch die Betätigungsvorrichtung (52) mittel- oder unmittelbar verlagerbar ist.

12. Reinigungspistole (1) nach einem der vorhergehenden Ansprüche,
wobei der Schließkolben (12) eine Vielzahl von seitlichen Eingangsöffnungen (24) und eine Ausgangsöffnung (26) aufweist,
wobei die Ausgangsöffnung (26) insbesondere durch die Kugel (20) der Ventileinrichtung (18) verschließbar ist.

13. Reinigungspistole (1) nach einem der vorhergehenden Ansprüche,
wobei der zweite Flussweg um den Schließkolben (12) führt.

14. Reinigungspistole (1) nach einem der vorhergehenden Ansprüche,
wobei die Strömungsleiteinrichtung (6) derart ausgelegt ist, dass bei einem Fluidfluss durch den zweiten Flussweg auch ein Fluidfluss durch den ersten Flussweg möglich ist.

## Claims

1. Cleaning pistol (1), in particular for a high-pressure cleaner, comprising a housing (2) with a flow channel (4), a flow directing device (6) and an actuating device (50), the flow channel (4) having an inlet (8) and an outlet (10), the flow directing device (6) being arranged at least partially in the flow channel (4), the flow directing device (6) being designed in such a way a fluid flow through the flow channel (4) from the inlet (8) to the outlet (10) can take place on different flow routes, including at least a first flow route (41) and a second flow route (42), the actuating device (50) being designed for actuating the flow directing device (6) and thereby controlling the fluid flow through the different flow routes, wherein the flow directing device (6) comprises a closing piston (12), wherein the flow directing device (6) comprises a valve device (18), wherein the valve device (18) comprises a ball (20) with a spring (22) wherein the first flow route (41) leads through an intermediate space between the ball (20) and the closing piston (12), wherein the cleaning pistol (1) is designed such that the first flow route (41) surrounds the second flow route (42) and/or the second flow route (42) surrounds the first flow route (41).

2. Cleaning pistol (1) according to claim 1, wherein the cleaning pistol (1) is designed so that the fluid flow can be controlled by at least partially displacing the flow directing device (6) relative to the housing (2), preferably in an actuating direction (B).

3. Cleaning pistol (1) according to claim 1 or 2, wherein the actuating device (50) is designed to open the first flow route (41) in a first actuating state and, if required, to open the second flow route (42) in a second actuating state.

4. Cleaning pistol (1) according to claim 3, wherein the actuating device (50) comprises a hand lever (52), wherein in the first actuating state the hand lever (52) is partially depressed and wherein in the second actuating state the hand lever (52) is depressed more strongly, preferably completely.

5. Cleaning pistol (1) according to one of the preceding claims, wherein the flow directing device (6) is designed in such a way that a fluid flow through the flow channel (4) from the inlet (8) to the outlet (10) can be prevented by the flow directing device (6), in particular when the flow directing device (6) or its components are in a closed position.

6. Cleaning pistol (1) according to one of the preceding claims, wherein the first flow route (41) passes at least partially through the closing piston (12).

7. Cleaning pistol (1) according to one of the preceding claims, wherein the valve means (18) is arranged within the closing piston (12) and is adapted to block or open the first flow route (41).

8. Cleaning pistol (1) according to one of the preceding claims, wherein the valve device (18) comprises a first resetting element (22) with a first resetting force, wherein the first resetting element (22) counteracts an opening of the valve device (19) by the actuating device (50) by means of the first resetting force, the closing piston (12) being pressed against a stop (32) by a second resetting element (30) with a second resetting force and thus being held in a lock position which blocks the second flow route (42) the resetting force counteracting actuation of the closing piston in an actuating direction (B) and thus opening of the second flow route (42) by the actuating device (50) the second resetting force being greater than the first resetting force.

9. Cleaning pistol (1) according to one of the preceding claims, wherein a part of the actuating device (50), in particular a transfer agent (54) of the actuating device (50), contacts the ball (20) directly or indirectly.

10. Cleaning pistol (1) according to one of the preceding claims, wherein the ball (20) is biased by the spring (22), in particular against the actuating direction (B), against the closing piston (12) and/or against the actuating device (50), in particular against the transfer agent (54) of the actuating device (50).

11. Cleaning pistol (1) according to one of the preceding claims, wherein the closing piston (12) and/or at least a part of the valve device (18) is directly or indirectly displaceable by the actuating device (52).

12. Cleaning pistol (1) according to one of the preceding claims, wherein the closing piston (12) comprises a plurality of lateral inlet openings (24) and an outlet opening (26), wherein the outlet opening (26) is in particular closable by the ball (20) of the valve device (18).

13. Cleaning pistol (1) according to one of the preceding claims, wherein the second flow route leads around the closing piston (12).

14. Cleaning pistol (1) according to one of the preceding claims, wherein the flow directing device (6) is designed in such a way that a fluid flow through the first flow route is also possible when fluid flows through the second flow route.

## Revendications

1. Pistolet de nettoyage (1), en particulier pour un appareil de nettoyage à haute pression, comprenant un boîtier (2) muni d'un canal d'écoulement (4), un dispositif de guidage de flux (6) et un dispositif d'actionnement (50), dans lequel
le canal d'écoulement (4) présente une entrée (8) et une sortie (10),
le dispositif de guidage de flux (6) est disposé au moins en partie dans le canal d'écoulement (4),
le dispositif de guidage de flux (6) est conçu de telle sorte qu'un écoulement de fluide à travers le canal d'écoulement (4) de l'entrée (8) à la sortie (10) peut avoir lieu sur différentes voies d'écoulement, dont au moins une première voie d'écoulement (41) et une deuxième voie d'écoulement (42),
le dispositif d'actionnement (50) est adapté pour actionner le dispositif de guidage de flux (6) et pour ainsi contrôler l'écoulement de fluide à travers les différentes voies d'écoulement,
le dispositif de guidage de flux (6) comprend un piston de fermeture (12),
le dispositif de guidage de flux (6) comprend un dispositif de vanne (18),
le dispositif de vanne (18) comprend une bille (20) avec un ressort (22),
la première voie d'écoulement (41) passe par un espace intermédiaire entre la bille (20) et le piston de fermeture (12),
le pistolet de nettoyage (1) est conçu de telle sorte que la première voie d'écoulement (41) entoure la deuxième voie d'écoulement (42) et/ou la deuxième voie d'écoulement (42) entoure la première voie d'écoulement (41).

2. Pistolet de nettoyage (1) selon la revendication 1,
dans lequel le pistolet de nettoyage (1) est conçu de manière à permettre de contrôler l'écoulement de fluide par un déplacement au moins partiel du dispositif de guidage de flux (6) par rapport au boîtier (2), de préférence dans une direction d'actionnement (B).

3. Pistolet de nettoyage (1) selon la revendication 1 ou 2,
dans lequel le dispositif d'actionnement (50) est conçu de telle sorte que, dans un premier état d'actionnement, la première voie d'écoulement (41) est ouverte et, si nécessaire, dans un deuxième état d'actionnement, la deuxième voie d'écoulement (42) est ouverte.

4. Pistolet de nettoyage (1) selon la revendication 3,
dans lequel le dispositif d'actionnement (50) comprend un levier à main (52),
dans le premier état d'actionnement, le levier à main (52) est partiellement poussé vers le bas, et
dans le deuxième état d'actionnement, le levier à main (52) est poussé plus loin vers le bas, de préférence complètement.

5. Pistolet de nettoyage (1) selon l'une des revendications précédentes,
dans lequel le dispositif de guidage de flux (6) est conçu de manière à permettre d'empêcher un écoulement de fluide à travers le canal d'écoulement (4) de l'entrée (8) vers la sortie (10) par le dispositif de guidage de flux (6), en particulier lorsque le dispositif de guidage de flux (6) ou ses composants se trouvent dans une position fermée.

6. Pistolet de nettoyage (1) selon l'une des revendications précédentes,
dans lequel la première voie d'écoulement (41) traverse au moins en partie le piston de fermeture (12).

7. Pistolet de nettoyage (1) selon l'une des revendications précédentes,
dans lequel le dispositif de vanne (18) est disposé à l'intérieur du piston de fermeture (12) et est adapté pour obstruer ou ouvrir la première voie d'écoulement (41).

8. Pistolet de nettoyage (1) selon l'une des revendications précédentes,
dans lequel le dispositif de vanne (18) comprend un premier élément de rappel (22) ayant une première force de rappel,
le premier élément de rappel (22) s'oppose, par la première force de rappel, à une ouverture du dispositif de vanne (19) par le dispositif d'actionnement (50),
le piston de fermeture (12) est pressé contre une butée (32) par un deuxième élément de rappel (30) ayant une deuxième force de rappel et est ainsi maintenu dans une position fermée qui obstrue la deuxième voie d'écoulement (42),
la force de rappel s'oppose à un actionnement du piston de fermeture dans une direction d'actionnement (B) et donc à une ouverture de la deuxième voie d'écoulement (42) par le dispositif d'actionnement (50),
la deuxième force de rappel est supérieure à la première force de rappel.

9. Pistolet de nettoyage (1) selon l'une des revendications précédentes,
dans lequel une partie du dispositif d'actionnement (50), en particulier un moyen de transmission (54) du dispositif d'actionnement (50), est en contact direct ou indirect avec la bille (20).

10. Pistolet de nettoyage (1) selon l'une des revendications précédentes,
dans lequel la bille (20) est précontrainte contre le piston de fermeture (12) et/ou contre le dispositif d'actionnement (50), en particulier contre le moyen de transmission (54) du dispositif d'actionnement (50), au moyen du ressort (22), en particulier en sens opposé à la direction d'actionnement (B).

11. Pistolet de nettoyage (1) selon l'une des revendications précédentes,
dans lequel le piston de fermeture (12) et/ou au moins une partie du dispositif de vanne (18) peut être déplacé directement ou indirectement par le dispositif d'actionnement (52).

12. Pistolet de nettoyage (1) selon l'une des revendications précédentes,
dans lequel le piston de fermeture (12) présente une pluralité d'ouvertures d'entrée latérales (24) et une ouverture de sortie (26),
en particulier, l'ouverture de sortie (26) peut être fermée par la bille (20) du dispositif de vanne (18).

13. Pistolet de nettoyage (1) selon l'une des revendications précédentes,
dans lequel la deuxième voie d'écoulement passe autour du piston de fermeture (12).

14. Pistolet de nettoyage (1) selon l'une des revendications précédentes,
dans lequel le dispositif de guidage de flux (6) est conçu de manière à permettre, lors d'un écoulement de fluide à travers la deuxième voie d'écoulement, également un écoulement de fluide à travers la première voie d'écoulement.
